# EUROPÄISCHE PATENTSCHRIFT

(11) **EP 0 755 503 B1**
(45) Veröffentlichungstag und Bekanntmachung des Hinweises auf die Patenterteilung: **08.07.1998**
(21) Anmeldenummer: 95915858.5
(22) Anmeldetag: 07.04.1995
(51) Int. Cl.: G01D 5/165, G01D 5/25

(54) **MESSSYSTEM FÜR LINEAR- ODER ANGULARBEWEGUNGEN**
SYSTEM FOR MEASURING LINEAR OR ANGULAR MOVEMENT
SYSTEME PERMETTANT DE MESURER DES MOUVEMENTS LINEAIRES OU ANGULAIRES

(30) Priorität: 15.04.1994 DE 4413098
(43) Veröffentlichungstag der Anmeldung: 29.01.1997
(73) Patentinhaber: LUCAS INDUSTRIES public limited company, Solihull, West Midlands B91 3TX (GB)
(72) Erfinder: KOHRT, Jens, Peter, D-56075 Koblenz (DE)
(74) Vertreter: Schmidt, Steffen J., Dipl.-Ing.
(86) Internationale Anmeldenummer: EP9501273
(87) Internationale Veröffentlichungsnummer: WO9528616

(56) Entgegenhaltungen:
- EP-A- 0 321 439
- DE-A- 4 137 092
- GB-A- 2 202 677
- PATENT ABSTRACTS OF JAPAN vol. 014 no. 420 (M-1023) ,11.September 1990 & JP,A,02 164655 (KAYABA IND CO LTD) 25.Juni 1990,

## Beschreibung

Die Erfindung bezieht sich auf ein Meßsystem mit den Merkmalen des Oberbegriffs des Anspruchs 1. Weiterhin betrifft die Erfindung Verwendungen eines derartigen Meßsystems.

Ausgangspunkt der Erfindung ist ein aus der Praxis bekanntes Meßsystem für Linear- oder Angularbewegungen, mit einem ersten Längen- oder Winkelaufnehmer, der nach einer ersten Meßmethode arbeitet und eine Eingangsgröße in Form einer Linear- oder Angularbewegung in eine elektrisch verarbeitbare erste Ausgangsgröße umsetzt.

Dies kann z.B. in Form eines Potentiometers realisiert sein, bei dem zur Umsetzung einer mechanischen Eingangsgröße, z.B. Wegstrecke oder Drehwinkel, in eine elektrische Ausgangsgröße, z.B. elektrische Spannung, ein Schleifkontakt auf einer Widerstandsbahn geführt ist, so daß eine Abhängigkeit der Ausgangsgröße von der Position des Schleifkontaktes auf der Widerstandsbahn und damit von der Eingangsgröße hergestellt wird.

Voraussetzung für das bestimmungsgemäße Eingangs-/Ausgangssignalverhalten des Potentiometers bildet dabei eine elektrisch einwandfrei leitende Verbindung zwischen dem Schleifkontakt und der Widerstandsbahn, die beispielsweise durch Ausbildung des Schleifkontaktes als Federhebel erreicht wird, so daß der Schleifkontakt permanent mit leichtem Druck auf die Oberfläche der Widerstandsbahn gepreßt wird.

Solche Potentiometer weisen vor allem den Nachteil auf, daß es unter Einwirkung der Anpreßkraft mit zunehmender Betriebszeit durch Reibung bedingt zum Verschleiß der Oberflächen des Schleifkontaktes und der Widerstandsbahn kommt, welcher sich als feiner Abrieb auf den Oberflächen des Schleifkontaktes und der Widerstandsbahn verteilt und eine Erhöhung des Übergangswiderstandes zur Folge hat, wodurch das Eingangs-/Ausgangssignalverhalten des Potentiometers negativ beeinflußt wird.

Insbesondere im Hinblick auf Verwendung in sicherheitskritischen Systemen erweist sich als Nachteil, daß zur Überwachung der Potentiometerfunktion der Einsatz mehrerer parallel zueinander angeordneter Potentiometer erforderlich ist, so daß eine gemeinsame Eingangsgröße mehrfach erfaßt wird und durch Vergleichen der jeweiligen Ausgangsgrößen auf Funktionsstörungen zurückgeschlossen werden kann. Dies ist jedoch mit hohen Kosten verbunden und erfordert zusätzlichen Einbauraum.

Ferner besteht bei der redundanten Ausführung der Nachteil, daß sogenannte "common mode" Fehler nicht ausgeschlossen sind, da zum einen die einzelnen Potentiometer nach dergleichen Technologie gefertigt sind, zum anderen die Signalaufbereitung der einzelnen Ausgangsgrößen nach dem gleichen Verfahren erfolgt.

DE 90 17 451 U1 offenbart eine Lehr- und Demonstrationsvorrichtung zum Veranschaulichen möglicher Fehler bei der Positionsmessung. in dieser Vorrichtung sind zwei Längenmeßgeräte vorgesehen, um die lineare Position einer auf einer Spindel angeordneten Spindelmutter inkrementell oder absolut zu bestimmen. Das erste Längenmeßgerät ist in endgültig justierter Anbaulage befestigt und dient als Vergleichsnormal. Das zweite Längenmeßgerät ist hinsichtlich der Anbaulage gezielt variierbar. Es kann parallel zum ersten Längenmeßgerät verschoben oder gekippt werden. Eine Positionsanzeige-Einrichtung mit einem Anzeigefeld für jedes der Längenmeßgeräte ist vorgesehen. Weiter kann die Spindel mit einem Winkelmeßgerät zur indirekten Wegmessung gekoppelt sein, dessen Meßwerte mit denen des in endgültig justierter Anbaulage montierten Längenmeßgerätes verglichen werden können. Schließlich ist offenbart, mit der Spindel mehrere Winkelmeßgeräte zu koppeln, die sich in der Art des Meßverfahrens unterscheiden.

Eine Verarbeitungs- und Ausgabeeinrichtung zum Erzeugen eines gemeinsamen Meßwertes ist hier nicht beschrieben. Es ist im Gegenteil Aufgabe dieser bekannten Vorrichtung, Meßfehler, die durch unterschiedliche Meßverfahren oder -anordnungen entstehen, zu simulieren und zu veranschaulichen. Das Erzeugen eines gemeinsamen Meßwertes würde solche Fehler verwischen oder beseitigen, so daß der Lehr- und Demonstrationszweck der Vorrichtung nicht mehr erfüllt wäre.

DE 69 15 696 U1 zeigt einen Meßkopf mit einer Welle, die beidseitig aus einem Gehäuse des Meßkopfes herausragende Wellenenden mit je einem Flansch aufweist, so daß es möglich ist, wahlweise das eine oder das andre Wellenende an eine zu überwachende Maschinenwelle anzuschließen. Der Meßkopf kann damit sowohl an rechtsdrehenden als auch an linksdrehenden Maschinen zum Einsatz kommen. Innerhalb des Meßkopfes sind mit der Welle ein Rotor eines Meßpotentiometers sowie Kodierscheiben drehfest verbunden. Die Kodierscheiben können als Loch- oder Schlitzscheiben ausgestaltet sein oder Steuerfahnen aus ferromagnetischem oder elektrisch leitfähigem Material tragen, durch das beim Passieren von Näherungsinitiatoren elektrische Impulse erzeugt werden.

Als Anwendungsbeispiel für den Meßkopf wird das Abbremsen einer kurbelgetriebenen Presse genannt. Um den Auslösezeitpunkt einer Bremse zu bestimmen, wird zunächst die Winkelgeschwindigkeit der Welle gemessen, indem die Zeit zwischen den durch die Kodierscheiben erzeugten Signale bestimmt wird. Wenn der Bremsvorgang beendet ist, die Welle also stillsteht, kann am Meßpotentiometer ein der jeweiligen Winkelstellung der Welle proportionales Analogsignal abgenommen werden. Die unterschiedlichen Meßsensoren des Meßköpfs dienen also der Messung unterschiedlicher physikalischer Größen (Winkelgeschwindigkeit und Winkelposition bei Stillstand).

US 4,693,111 offenbart einen Meßsensor für Linearbewegungen, der mehrere elektrische Meßbahnen aufweist, die jeweils als Widerstandsbahnen ausgebildet sind. Die Widerstandsbahnen haben entweder eine unterschiedliche Länge (und eine unterschiedliche Auflösung), oder sie sind gleich lang und gestaffelt angeordnet. Über einen Schalter ist wahlweise die Ausgangsgröße einer der Widerstandsbahnen der weiteren Verarbeitung zuführbar.

Bei einem derartigen Meßsensor sind keine zwei mit unterschiedlichen Meßmethoden arbeitenden Meßsensoren vorgesehen. Die Anordnung dient dazu, über den Meßbereich des Sensors entweder unterschiedliche, von der Meßposition abhängige Auflösungen oder eine besonders hohe Auflösung bereitzustellen. Dazu wird in jeder Meßposition jeweils nur eine Ausgangsgröße eines der Sensoren herangezogen. Eine besonders zuverlässige und gegen Funktionsstörungen sichere Messung kann mit einem Sensor nach Dokument 3 nicht erreicht werden.

DE 30 46 363 Al offenbart ein Positionsregelsystem mit einer digitalen inkrementellen Meßeinrichtung, das durch die Verwendung eines Diskriminators und eines Rechners die Erfassung von langen Wegen bei hoher Auflösung ermöglicht. Die Verwendung unterschiedlicher Meßmethoden ist nicht offenbart.

Aus DE 39 30 571 Al ist es bekannt, zur Überwachung einer Bremseinrichtung auf Überlast die Temperatur eines ausgewählten Bauteils (z.B. einer Bremstrommel) zu messen, indem ein Überschreiten der zulässigen druckabhängigen Verformungskennlinie des Bauteils ermittelt wird.

Der Erfindung liegt daher die Aufgabe zugrunde, ein Meßsystem der eingangs genannten Art so weiterzuentwickeln, daß die vorgenannten Nachteile vermieden werden und eine erhöhte Funktionssicherheit des Meßsystems erreicht wird.

Die Lösung der Aufgabe erfolgt gemäß der Erfindung dadurch, daß ein eingangs genanntes gattungsgemäßes Meßsystem durch die Merkmale des kennzeichnenden Teils des Anspruchs 1 weitergebildet ist.

Damit können zwei Signale unterschiedlicher Herkunft, die als erste und zweite Ausgangsgröße für die gleiche mechanische Eingangsgröße charakteristisch sind, verarbeitet und zur Auswertung herangezogen werden.

Wegen der (physikalisch bzw. prinzipiell) unterschiedlichen Meßmethoden können Fehler oder Defekte, die bei dem einen Längen- oder Winkelaufnehmer auftreten, durch die Ausgangsgröße des anderen Längen- oder Winkelaufnehmers erkannt und berichtigt werden. Eine andere Möglichkeit besteht darin, bei Erkennen eines Fehlers der einen Ausgangsgröße nur noch die andere Ausgangsgröße zur Auswertung und Weiterverarbeitung heranzuziehen.

Vorzugsweise arbeitet der erste Längen- oder Winkelaufnehmer nach einer analogen Meßmethode und der zweite Längen- oder Winkelaufnehmer nach einer digitalen Meßmethode. Dies hat den Vorteil, daß eine sehr gute Entkopplung der jeweiligen möglichen Störeinflüsse auf die beiden Längen- oder Winkelaufnehmer möglich ist.

Bei einer bevorzugten Ausführungsform sind erste und zweite Umsetzer für die Umsetzung der ersten und der zweiten Ausgangsgröße in jeweilige erste und zweite miteinander vergleichbare Meßwerte vorgesehen, und/oder die Meßwerte bzw. die Ausgangsgrößen werden in einer Verarbeitungs- und Ausgabeeinrichtung verarbeitet und anschließend ausgegeben.

Diese Umsetzer und/oder die Verarbeitungs- und Ausgabeeinrichtung können sehr dicht bei den beiden Längen- oder Winkelaufnehmern angeordnet sein (ggf. auch auf dem gleichen Substrat), um für die weitere Signalverarbeitung ein möglichst weitgehend aufbereitetes Signal zur Verfügung stellen zu können.

Vorzugsweise ist die erste Meßmethode für den ersten Längen- oder Winkelaufnehmer eine Erfassung sich in Abhängigkeit eines Weges oder eines Winkels kontinuierlich ändernder elektrischer Widerstands-, Kapazitäts-, Induktivitäts-, Lichtdurchlässigkeits-, oder Feldstärkewerte, und die zweite Meßmethode für den zweiten Längen- oder Winkelaufnehmer eine Erfassung sich in Abhängigkeit eines Weges oder eines Winkels impulsförmig ändernder elektrischer Widerstands-, Kapazitäts-, Induktivitäts-, Lichtdurchlässigkeits-, oder Feldstärkewerte. Das heißt, daß grundsätzlich für beide Längen- oder Winkelaufnehmer die selben Meßprinzipien verwendet werden können. Da bei einer konkreten Ausgestaltung des Meßsystems jeweils zwei unterschiedliche Meßmethoden verwendet werden, und bei der Realisierung als sich kontinuierlich ändernder Werte einerseits und impulsförmig (digital) ändernder Werte andererseits jeweils auch unterschiedliche Erfassungs- bzw. Auswertevorrichtungen zum Einsatz kommen, können spezifische Störanfälligkeiten der einen Art von Längen- oder Winkelaufnehmer durch die Resistenz des anderen Längen- oder Winkelaufnehmer in dieser Hinsicht ausgeglichen werden, und umgekehrt.

Um bei Ausfall der Versorgungsspannung nach deren Wiederherstellen eine absolute Position der Eingangsgröße ermitteln zu können, ohne das Meßsystem zuerst wieder auf eine definierte Anfangsposition (smin, smax) bringen zu müssen, ist es vorteilhaft, wenn der erste und/oder der zweite Längen- oder Winkelaufnehmer ein codierter Aufnehmer ist, der eine von dem Weg oder Winkel abhängige absolute Ausgangsgröße ausgibt.

Für einige Anwendungen kann es jedoch ausreichend oder gar von Vorteil sein, daß der erste und/oder der zweite Längen- oder Winkelaufnehmer ein inkrementaler Aufnehmer ist, der eine von einem vorbestimmten Wegabschnitt oder Winkelabschnitt abhängige relative Ausgangsgröße ausgibt. Dies ermöglicht nämlich eine sehr einfache Auswertung (durch Zählen der abgegebenen Impulse).

Bei einer bevorzugten Ausführungsform ist der erste Längen- oder Winkelaufnehmer als Potentiometer ausgebildet und der zweite Längen- oder Winkelaufnehmer ist als mechanisch abtastbares Raster ausgebildet. Dabei ist das Raster vorzugsweise als äquidistantes Streifenmuster ausgebildet und einzelne Streifen des Rasters sind elektrisch miteinander verbunden. Insbesondere bei inkrementalen oder codierten Aufnehmern besteht auch die Möglichkeit einer optischen Abtastung.

Außerdem sind der erste und der zweite Längen- oder Winkelaufnehmer parallel bzw. koaxial zueinander angeordnet und neben ihnen ist wenigstens eine elektrisch leitende Leitungsspur als Betriebsspannungszufuhr oder zur Meßgrößenableitung angeordnet.

Wenn einer der Längen- oder Winkelaufnehmer eine Ausgangsgröße bereitstellt, die eine Information über die Absolutposition enthält, z.B. ein Potentiometer, ein Drehkondensator oder dergl., kann diese Ausgangsgröße auch als Eingangsgröße für den anderen Längen- oder Winkelaufnehmer dienen, wenn dieser lediglich eine Relativbewegung erfassen kann. Auf diese Weise wird der (lediglich eine relative Größe wiedergebende) Ausgangsgröße des anderen Längen- oder Winkelaufnehmers eine Information über die Absolutposition aufgeprägt. Damit sind die beiden Längen- oder Winkelaufnehmer zwar in ihrer Wirkungsweise nicht mehr vollständig entkoppelt, aber für einige Anwendungen kann diese Ausführungsform ausreichend oder gar von Vorteil sein.

Bei höheren Anforderungen an die Sicherheit kann es jedoch erforderlich sein, die Ausgangsgröße des einen Längen- oder Winkelaufnehmers von der Ausgangsgröße des anderen Längen- oder Winkelaufnehmers unabhängig zu halten. Zwar sind die beiden Ausgangsgrößen über die Eingangsgröße verknüpft. Aber ein Einfluß auf die eine Meßmethode aufgrund von Störungen oder Defekten hat keinen Einfluß auf andere Ausgangsgröße, wenn die eine Meßgröße nicht zur Gewinnung der anderen Ausgangsgröße herangezogen wird, d.h. nicht in sie eingeht.

Um eine möglichst hohe Sicherheit bei dem für die nachfolgenden Signalverarbeitung bereitgestellten Meßwert zu erzielen, ist es vorteilhaft, wenn die Verarbeitungs- und Ausgabeeinrichtung dazu eingerichtet ist, einen zu erwartenden Wert der Ausgangsgröße des einen Längen- oder Winkelaufnehmers aus der Ausgangsgröße des anderen Längen- oder Winkelaufnehmers zu ermitteln, den Erwartungswert mit der tatsächlichen Ausgangsgröße zu vergleichen, und im Fall einer Abweichung um einen vorbestimmten Wert ein Fehlersignal zu erzeugen. Alternativ oder zusätzlich dazu kann auch eine direkte Korrektur des abgegebenen Meßwertes direkt durch die Verarbeitungs- und Ausgabeeinrichtung erfolgen.

Die Verarbeitungs- und Ausgabeeinrichtung kann auch aus dem zeitlichen Verlauf der ersten und/oder der zweiten Ausgangsgröße unter Zugrundelegung deren zeitlichem Verlauf ermitteln, ob die jeweilige Ausgangsgröße einen möglichen korrekten Wert aufweist und im Falle einer Abweichung um einen vorbestimmten Wert vom Erwartungswert ein Fehlersignal erzeugt und/oder den Fehler korrigiert.

Eine Variante der Ermittlung eines Erwartungswertes besteht darin, daß die Verarbeitungs- und Ausgabeeinrichtung einen Zeitgeber aufweist, der ein Zeitsignal liefert, das für eine Überprüfung einer oder beiden Ausgangsgrößen unter Zugrundelegung vorherbestimmter Weg/Winkel-Zeit-Beziehungen verwendet wird. Z. B. kann bei einem Inkrementalgeber als Längen- oder Winkelaufnehmer durch den Zeitgeber eine minimale und/oder eine maximale Pulsdauer vorgegeben werden, die die Ausgangsgröße bzw. das Ausgangssignal des Längen- oder Winkelaufnehmers haben kann. Eine andere Möglichkeit besteht darin, aus einer Widerstands-, Kapazitäts- oder dergl. Änderungsgeschwindigkeit auf die zu erwartende Pulsdauer eines Inkrementalgebers zu schließen.

Falls für die weitere Signalverarbeitung weitere Informationen über die Eingangsgröße erforderlich sind, kann in vorteilhafter Weise die Verarbeitungs- und Ausgabeeinrichtung aus der ersten und/oder der zweiten Ausgangsgröße und dem Zeitsignal unter Zugrundelegung vorherbestimmter Weg/ Winkel-Zeit-Beziehungen abgeleitete Größen, nämlich Geschwindigkeit und/oder Beschleunigung der Eingangsgröße ermitteln.

Die Ermittlung der abgeleiteten Größen kann auch in der Weise erfolgen, daß die Verarbeitungs- und Ausgabeeinrichtung aus der ersten und/oder der zweiten Ausgangsgröße unter Zugrundelegung deren zeitlichem Verlauf die abgeleiteten Größen ermittelt.

Im übrigen gibt es eine Reihe von Anwendungssituationen, in denen eine Relativbewegung um eine bestimmte Strecke oder Relativdrehung um einen bestimmten Winkel zu mesen ist. In diesen Fällen ist es nicht unbedingt erforderlich, eine Absolutposition zu erfassen, sondern es ist ausreichend, die Relativbewegung zu erfassen. Auch hierfür ist der Erfindungsgegenstand, wie er vorstehend beschrieben ist, einsetzbar.

Gemäß einer bevorzugten Verwendung des vorstehend beschriebenen Meßsystems, wird dieses in einer elektronischen Bremsanlage mit einem elektronisch einstellbaren Bremskraftverstärker für Kraftfahrzeuge eingesetzt, wobei eine Betätigung eines mit dem Bremskraftverstärker gekoppelten Bremspedals eine Linear- oder Angularbewgung (s, alpha) hervorruft, die durch das an geeigneter Stelle in der Anlage angeordnete Meßsystem erfaßt wird, wobei der Meßwert und ein ggf. erzeugtes Fehlersignal aus der Verarbeitungs- und Ausgabeeinrichtung in der elektronischen Bremsanlage zur Erzeugung eines Ansteuersignals für den Bremskraftverstärker herangezogen wird.

Die Erfindung wird nachfolgend anhand von Zeichnungen erläutert. Es zeigen:
- Fig. 1: schematisch eine Ausführungsform des erfindungsgemäßen Potentiometersystems, welche vorzugsweise der Erfassung einer geradlinigen Bewegung dient,
- Fig. 2: einen möglichen, hier linearen Verlauf der analogen Ausgangsgröße in Abhängigkeit von der Eingangsgröße,
- Fig. 3: einen möglichen, hier linearen Verlauf der impulsförmigen Ausgangsgröße in Abhängigkeit von der Eingangsgröße,
- Fig. 4: Blockschaltbild einer möglichen Auswerteeinheit,
- Fig. 5: schematisch eine weitere Ausführungsform des erfindungsgemäßen Potentiometersystems,
- Fig. 6: den Verlauf der impulsförmigen Ausgangsgröße in Abhängigkeit der Eingangsgröße, der sich gemäß der Ausführung nach Fig. 5 ergibt,
- Fig. 7: schematisch eine Ausführungsform, welche vorzugsweise der Erfassung einer Drehbewegung dient, und
- Fig. 8: ein Blockschaltbild des Meßsystems.

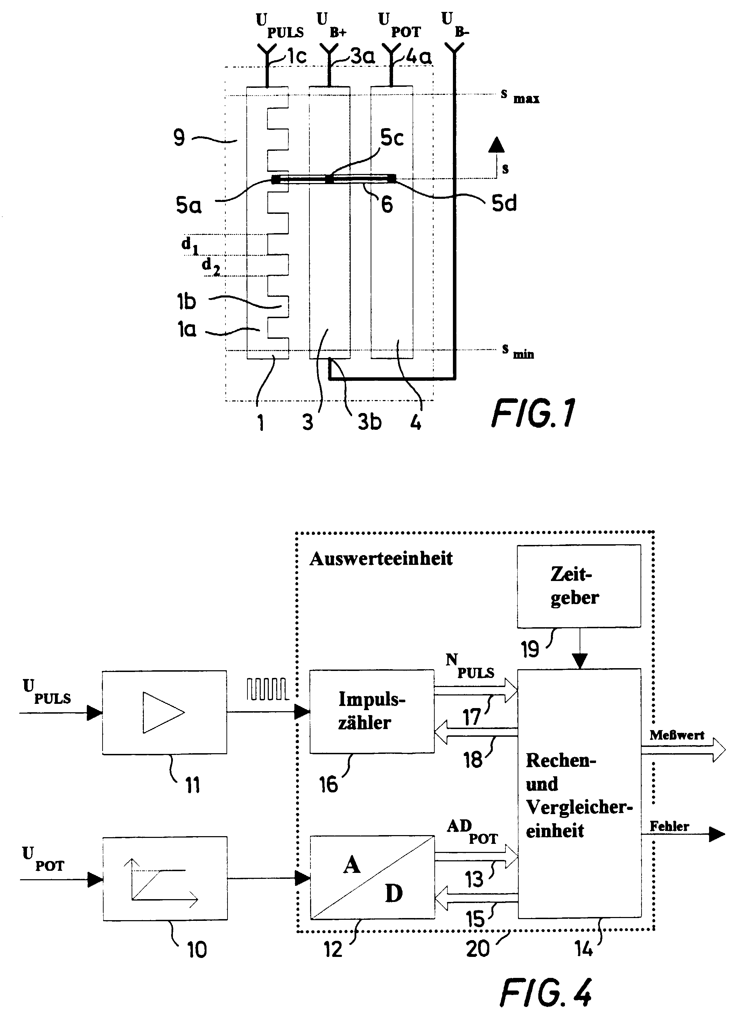

Fig. 1 zeigt auf einem elektrisch isolierenden Substrat 9 drei langgestreckte, parallel zueinander angeordnete Schleifbahnen in Form einer kammförmigen (elektrisch leitenden) Schleifbahn 1, einer Widerstandbahn 3 sowie einer homogenen (elektrisch leitenden) Schleifbahn 4, auf denen die Schleifkontakte 5a, 5c und 5d in s-Richtung im Bereich von smin bis smax gleiten. Über ein quer zu den Schleifbahnen 1, 3, 4 angeordnetes und mit den Schleifkontakten starr verbundenes Verbindungsteil 6 besteht zwischen den Schleifkontakten 5a, 5c und 5d eine starre und vor allem elektrisch einwandfrei leitende Verbindung. Die zu erfassende Eingangsgröße s wird in geeigneter Form über das Verbindungsteil 6 eingeleitet, was hier nicht näher auszuführen ist.

Die kammförmige Schleifbahn 1 ist aus einem durchgehenden Abschnitt la gebildet, an dem in einem in s-Richtung äquidistanten Raster seitlich Vorsprünge 1b angeformt sind, über die die Schleifkontakte 5a gleiten.

Die positive- und negative Betriebsspannung, UB+ bzw. UB-, wird jeweils an Endpunkten 3a und 3b der Widerstandsbahn 3 eingespeist. Die von der Eingangsgröße s abhängige Potentiometerspannung UPOT wird über den Schleifkontakt 5c an der Widerstandsbahn 3 abgegriffen, über den Schleifkontakt 5d auf die homogene Schleifbahn 4 übertragen und kann an Punkt 4a zur weiteren Signalverarbeitung abgenommen werden.

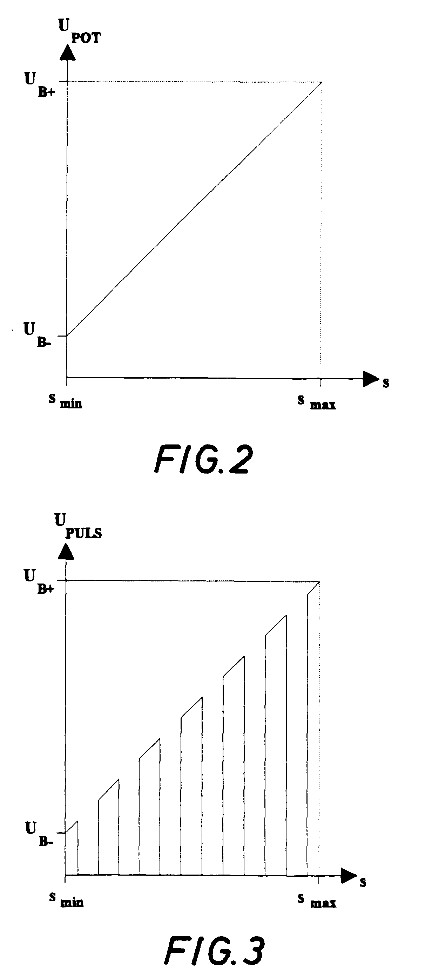

In Fig. 2 ist der Verlauf der Potentiometerspannung UPOT für den Fall dargestellt, daß das Verbindungsteil 6 und damit die Schleifkontakte 5a, 5c und 5d in s-Richtung im Bereich von smin nach smax gleichförmig bewegt werden. Demgemäß wird jeder Position s ein eindeutiger Spannungswert UPOT zugeordnet.

Bei Verschiebung des Verbindungsteils 6 längs der s-Richtung wird über den Schleifkontakt 5a, der ebenfalls die Potentiometerspannung UPOT führt, die Unterbrecherseite 1b der kammförmigen Schleifbahn 1 abgetastet, so daß an dem Punkt 1c ein impulsförmiger Spannungsverlauf UPULS abgenommen werden kann.

Auf diese Weise wird neben der eigentlichen Ausgangsgröße des Potentiometers UPOT, die als analoges Signal die absolute Position des Schleifkontaktes 5c auf der Widerstandsbahn 3 wiedergibt, eine weitere Ausgangsgröße UPULS bereitgestellt, die als Impulsfolge relative Positionsänderungen des Schleifkontaktes 5c auf der Widerstandsbahn 3 anzeigt.

Bei gleichförmiger Bewegung des Verbindungsteils 6 in s-Richtung ergibt sich der in Fig. 3 gezeigte impulsförmige Spannungsverlauf UPULS. Dabei stellt sich in den Bereichen, wo eine Kontaktierung zwischen Unterbrecherseite 1b und Schleifkontakt 5a auftritt, für UPULS stets dergleiche Verlauf wie bei UPOT ein, ansonsten fällt UPULS auf einen Wert in der Größenordnung Null ab.

Befindet sich das Verbindungsteil 6 in einer Ruheposition, die stets nicht vorherbestimmt ist, so nimmt UPULS entweder den aktuellen Wert von UPOT oder den Wert nahe Null an.

Damit ergibt sich der Vorteil, daß einer nachgeschalteten Auswerteeinheit 20 voneinander unabhängige Ausgangsgrößen UPULS, UPOT zugeführt werden können, wodurch die bei sicherheitskritischen Systemen geforderte Überwachung sowohl der Potentiometerfunktion als auch der Anschlußleitungen zur Auswerteeinheit möglich ist.

Im Hinblick auf den bevorzugten Einsatz von Mikroprozessoren oder Microcontrollern als Auswerteeinheit erweist sich als Vorteil, daß auch der Mikroprozessor oder Microcontroller überwacht wird, da die Ausgangsgrößen UPOT, UPULS in voneinander unabhängigen analogen sowie digitalen Signalwegen innerhalb der Auswerteeinheit 20 verarbeitet werden.

Ein weiterer Vorteil besteht darin, daß die von der kammförmigen Schleifbahn 1 abgegriffene Impulsfolge UPLULS mit zunehmender Betriebszeit keiner negativen Beeinflussung durch erhöhte Übergangswiderstände bedingt unterliegt, und damit gegebenenfalls zur Korrektur des an der Widerstandsbahn 3 abgegriffenen analogen Signales UPOT herangezogen werden kann.

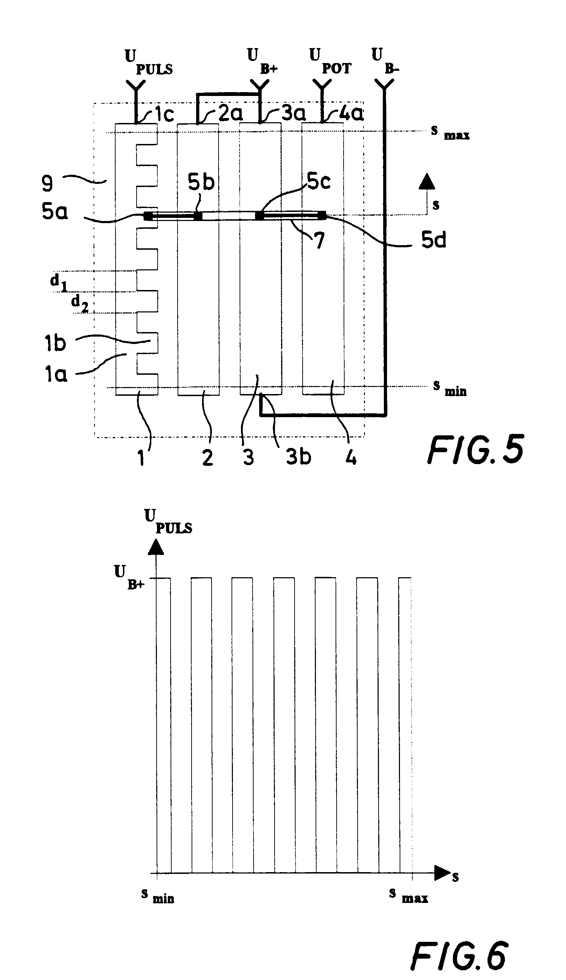

Eine mögliche Form der Weiterverarbeitung der Potentiometerspannung UPOT und des impulsförmigen Spannungsverlaufs UPULS wird anhand von Fig. 4 erläutert.

Hierbei wird UPOT einem Analog-/Digital-Umsetzer 12 zugeführt, dem als Schutzmaßnahme üblicherweise ein Spannungsbegrenzer und Impulsformer- oder Filterbaustein 10 vorgeschaltet ist. Der digitalisierte Wert ADPOT wird dann über einen Kanal 13 einer Rechen- und Vergleichereinheit 14 zugeführt, so daß dort unter Zugrundelegung des Eingangs-/Ausgangssignalverhaltens des verwendeten Potentiometersystems die absolute Position s bestimmt werden kann. Die Steuerung des Analog-/Digital-Umsetzers 12 erfolgt durch die Rechen- und Vergleichereinheit 14 über einen Kanal 15.

UPULS wird über Baustein 11 in geeigneter Weise verstärkt und gefiltert, um als rechteckförmige Impulsfolge dem Impulszähler 16 zugeführt zu werden. Der Zählerstand NPULS wird als Digitalwert über Kanal 17 an die Rechen- und Vergleichereinheit 14 übermittelt, so daß beim Verfahren des Verbindungsteils 6 in s-Richtung mit Kenntnis der Abmessung d2 der Vorsprünge 1b in s-Richtung und des Abstandes dl zweier aufeinanderfolgender Vorsprünge 1b in s-Richtung an der Schleifbahn 1 relative Positionsänderungen delta-s bestimmt werden können. Die notwendigen Steuerungsaufgaben, wie zum Beispiel das Zurücksetzen des Zählerstandes NPULS, werden auch hier von der Rechen- und Vergleichereinheit 14 über einen Kanal 18 übernommen.

Überwachungs- und/oder Korrekturaufgaben könnten innerhalb der Rechen- und Vergleichereinheit 14 beispielsweise über einen Algorithmus ausgeführt werden, derart, daß stets die letzte absolute Postion s(n-1) zwischengespeichert wird, nach Verfahren in eine neue absolute Position s(n) die Differenz s(n)-s(n-1) gebildet wird, die dann mit der unabhängig bestimmten relativen Positionsänderung delta-s verglichen wird.

Durch den Zeitgeber 19 ist es der Rechen- und Vergleichereinheit 14 möglich die Signale ADPOT und NPULS in Abhängigkeit der Zeit zu erfassen und damit unter Anwendung bekannter Längen-Zeit-Beziehungen auch Größen wie bespielsweise Geschwindigkeit oder Beschleunigung zu bestimmen.

Da die Funktionsblöcke Analog-/Digital-Umsetzer 12, Rechen- und Vergleichereinheit 14, Impulszähler 16 sowie Zeitgeber 19 auf handelsüblichen Mikrorechnern bereits serienmäßig bereitgestellt werden, kann die Auswerteeinheit 20 unter Verwendung eines solchen Mikrorechners besonders einfach und kostengünstig ausgeführt werden.

Fig. 5 zeigt eine Weiterbildung der Ausführung nach Fig. 1, bei der eine weitere homogene Schleifbahn 2 angeordnet ist, auf der ein weiterer Schleifkontakt 5b in s-Richtung im Bereich von smin bis smax gleitet. An Punkt 2a der homogenen Schleifbahn 2 wird die positive Betriebsspannung UB+ eingespeist. Eine starre Verbindung zwischen den Schleifkontakten 5a-d wird hier ebenfalls durch ein Verbindungsteil 7 hergestellt, allerdings besteht eine elektrisch einwandfrei leitende Verbindung nur zwischen den Schleifkontakten 5a und 5b, sowie zwischen den Schleifkontakten 5c und 5d.

Erfolgt hier bei Verschiebung des Verbindungsteils 7 in s-Richtung durch Schleifkontakt 5a eine Abtastung der Unterbrecherseite 1b , so kann am Punkt 1c ein impulsförmiger Spannungsverlauf UPULS abgenommen werden, der eine konstante Amplitude aufweist.

Der Spannungsverlauf für UPULS, der sich für diese Ausführung bei gleichförmiger Bewegung des Verbindungsteils 7 in s-Richtung ergibt, ist in Fig. 6 dargestellt.

Vorteilhaft bei dieser Ausgestaltung erweist sich zum einen, daß Baustein 11 zur Signalaufbereitung von UPULS einfacher und damit kostengünstiger ausgeführt werden kann, zum anderen, daß die Ausgangsgrößen Potentiometerspannung UPOT und impulsförmiger Spannungsverlauf UPULS vollständig voneinander entkoppelt sind.

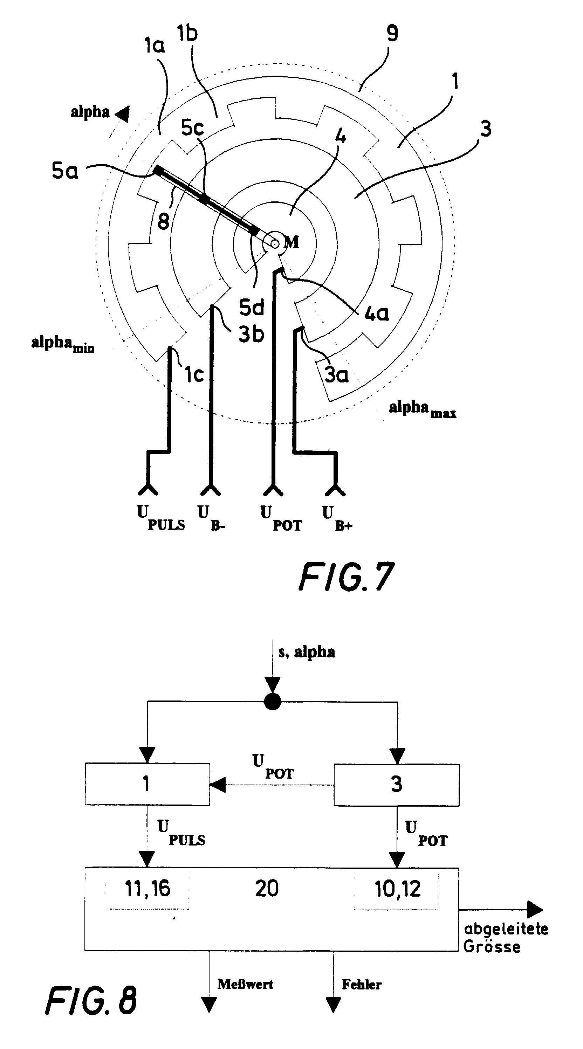

In Fig. 7 ist eine Ausführungsform der Erfindung dargestellt, wie sie vorzugsweise bei Erfassung einer Drehbewegung zum Einsatz kommt. Hierbei sind die homogene Schleifbahn 4, die Widerstandsbahn 3 sowie die kammförmige Schleifbahn 1 koaxial zum Mittelpunkt M des Systems angeordnet.

Die Schleifkontakte 5d, 5c und 5a sind starr und elektrisch einwandfrei leitend über das Verbindungsteil 8, welches eine drehbare Aufnahme im Mittelpunkt M besitzt, miteinander verbunden, so daß bei Einleitung der Eingangsgröße alpha die Schleifkontakte 5d, 5c und 5a radial zum Mittelpunkt M im Bereich von alphamin bis alphamax auf den zugehörigen Schleifbahnen (4, 3 und 1) geführt werden.

Die Einspeisung der Betriebsspannungen UB+ und UB- erfolgt an den Endpunkten 3a und 3b der Widerstandsbahn 3, die Abnahme von UPOT erfolgt an Punkt 4a der homogenen Schleifbahn 4, UPULS wird am Punkt lc der kammförmigen Schleifbahn 1 abgenommen.

Erfolgt eine gleichförmige Drehbewegung des Verbindungsteils 8 um den Mittelpunkt M im Bereich von alphamin bis alphamax, so stellt sich für den Fall einer linearen Widerstandsbahn 3 für UPULS der gleiche wie in Fig. 3 gezeigte Verlauf ein.

In Fig. 8 ist ein Blockschaltbild des Meßsystems veranschaulicht, das die prinzipielle Funktionsweise verdeutlicht. Die Eingangsgröße s oder alpha wird parallel dem ersten und dem zweiten Längen- oder Winkelaufnehmer 3,1 zugeführt. Die strichlierte Verbindung von dem ersten Längen- oder Winkelaufnehmer 3 zu dem zweiten Längen- oder Winkelaufnehmer 1 veranschaulicht die in den Fig. 1 und 7 gezeigte Variante, daß die eine Ausgangsgröße (hier UPOT) durch die andere Ausgangsgröße (hier UPULS) moduliert wird, um in beiden Ausgangsgrößen eine Information über die Absolutposition s, alpha zu haben.

Die beiden Ausgangsgrößen UPOT, UPULS werden dann der Auswertungs- und Verarbeitungseinheit 20 zugeführt, die dann beiden Ausgangsgrößen verarbeitet und einen Meßwert sowie ggf. ein Fehlersignal ausgibt.

Als entscheidender Vorteil bleibt jedoch hervorzuheben, daß bei Ausgestaltung des erfindungsgemäßen Meßsystem als Potentiometeranordnung mit einem parallel angeordneten Inkrementalgeber neben allen bereits angeführten Vorteilen eine einfache und kostengünstige Herstellung möglich und vor allem sehr wenig Einbauraum benötigt wird.

Die bisher betrachtete Ausführung, bei der zur Generierung der Impulsfolge zusätzlich zur Widerstandsbahn eines Potentiometers eine kammförmige Schleifbahn aufgebracht wird, stellt eine fertigungstechnisch günstige Form dar, aber auch der Einsatz optoelektrischer, induktiver oder kapazitiver Verfahren ist für die Erzeugung der Ausgangsgröße in Betracht zu ziehen.

## Patentansprüche

1. Meßsystem für Linear- oder Angularbewegungen, mit
- einem ersten Längen- oder Winkelaufnehmer (3), der nach einer ersten Meßmethode arbeitet und eine Eingangsgröße (s, alpha) in Form einer Linear- oder Angularbewegung in eine elektrisch verarbeitbare erste Ausgangsgröße (UPOT) umsetzt,
- einem mit dem ersten Längen- oder Winkelaufnehmer (3) mechanisch gekoppelten zweiten Längen- oder Winkelaufnehmer (1), der nach einer von der ersten Meßmethode unterschiedlichen Meßmethode arbeitet und die Linear- oder Angularbewegung (s, alpha) in eine elektrisch verarbeitbare zweite Ausgangsgröße (UPULS) umsetzt, wobei
- die erste und die zweite Ausgangsgröße (UPOT, UPULS) für eine nachfolgende Verarbeitung und Auswertung bereitstehen,
dadurch gekennzeichnet, daß
- die Ausgangsgröße (UPOT) des einen Längen- oder Winkelaufnehmers (3) auch als Eingangsgröße für den anderen Längen- oder Winkelaufnehmer (1) dient.

2. Meßsystem für Linear- oder Angularbewegungen nach Anspruch 1, dadurch gekennzeichnet, daß
- eine Verarbeitungs- und Ausgabeeinrichtung (20) vorhanden ist, die dazu eingerichtet ist, die beiden Ausgangsgrößen zu verarbeiten und einen Meßwert sowie gegebenenfalls ein Fehlersignal auszugeben.

3. Meßsystem für Linear- oder Angularbewegungen nach einem der vorhergehenden Ansprüche, dadurch gekennzeichnet, daß der erste Längen- oder Winkelaufnehmer (3) nach einer analogen Meßmethode arbeitet und der zweite Längen- oder Winkelaufnehmer (1) nach einer digitalen Meßmethode arbeitet.

4. Meßsystem für Linear- oder Angularbewegungen nach einem der vorhergehenden Ansprüche, dadurch gekennzeichnet, daß erste und zweite Umsetzer (10,12; 11,16) für die Umsetzung der ersten und der zweiten Ausgangsgröße (UPOT, UPULS) in jeweilige erste und zweite miteinander vergleichbare Meßwerte (ADPOT, NPULS) vorhanden sind, die in einer Verarbeitungs- und Ausgabeeinrichtung (20) verarbeitet und ausgegeben werden.

5. Meßsystem für Linear- oder Angularbewegungen nach einem der vorhergehenden Ansprüche, dadurch gekennzeichnet, daß
- der erste Längen- oder Winkelaufnehmer (3) eine Erfassung sich in Abhängigkeit eines Weges (s) oder eines Winkels (alpha) kontinuierlich ändernder elektrischer Widerstands-, Kapazitäts-Induktivitäts-, Lichtdurchlässigkeits-, oder Feldstärkewerte auszuführen vermag, und
- der zweite Längen- oder Winkelaufnehmer (1) eine Erfassung sich in Abhängigkeit eines Weges (s) oder eines Winkels (alpha) impulsförmig ändernder elektrischer Widerstands-, Kapazitäts-, Induktivitäts-, Lichtdurchlässigkeits-, oder Feldstärkewerte auszuführen vermag.

6. Meßsystem für Linear- oder Angularbewegungen nach einem der vorhergehenden Ansprüche, dadurch gekennzeichnet, daß der erste und/oder der zweite Längen- oder Winkelaufnehmer (1) ein codierter Aufnehmer ist, der eine von dem Weg oder Winkel (s, alpha) abhängige absolute Ausgangsgröße ausgibt.

7. Meßsystem für Linear- oder Angularbewegungen nach einem der vorhergehenden Ansprüche, dadurch gekennzeichnet, daß der erste und/oder der zweite Längen- oder Winkelaufnehmer (1) ein inkrementaler Aufnehmer ist, der eine von einem vorbestimmten Wegabschnitt oder Winkelabschnitt abhängige relative Ausgangsgröße ausgibt.

8. Meßsystem für Linear- oder Angularbewegungen nach einem der vorhergehenden Ansprüche, dadurch gekennzeichnet, daß der erste Längen- oder Winkelaufnehmer (3) als Potentiometer ausgebildet ist und der zweite Längen- oder Winkelaufnehmer (1) als mechanisch abtastbares Raster (1b) ausgebildet ist.

9. Meßsystem für Linear- oder Angularbewegungen nach dem vorhergehenden Anspruch, dadurch gekennzeichnet, daß das Raster (1b) als äquidistantes Streifenmuster ausgebildet ist.

10. Meßsystem für Linear- oder Angularbewegungen nach dem vorhergehenden Anspruch, dadurch gekennzeichnet, daß einzelne Streifen des Rasters (1b) elektrisch miteinander verbunden sind.

11. Meßsystem für Linear- oder Angularbewegungen nach einem der vorhergehenden Ansprüche, dadurch gekennzeichnet, daß der erste und der zweite Längen- oder Winkelaufnehmer (3, 1) parallel bzw. koaxial zueinander angeordnet sind, neben denen wenigstens eine elektrisch leitende Leitungsspur (2, 4) als Betriebsspannungszufuhr oder zur Meßgrößenableitung angeordnet ist.

12. Meßsystem für Linear- oder Angularbewegungen nach einem der vorhergehenden Ansprüche, dadurch gekennzeichnet, daß die Verarbeitungs- und Ausgabeeinrichtung (20) dazu eingerichtet ist, einen zu erwartenden Wert der Ausgangsgröße des einen Längen- oder Winkelaufnehmers aus der Ausgangsgröße des anderen Längen- oder Winkelaufnehmers zu ermitteln, den Erwartungswert mit der tatsächlichen Ausgangsgröße zu vergleichen, und im Fall einer Abweichung um einen vorbestimmten Wert ein Fehlersignal zu erzeugen.

13. Meßsystem für Linear- oder Angularbewegungen nach einem der vorhergehenden Ansprüche, dadurch gekennzeichnet, daß die Verarbeitungs- und Ausgabeeinrichtung (20) einen Zeitgeber (19) aufweist, der ein Zeitsignal liefert, das für eine Überprüfung einer oder beider Ausgangsgrößen (UPOT, UPULS) unter Zugrundelegung vorherbestimmter Weg/Winkel-Zeit-Beziehungen verwendet wird.

14. Meßsystem für Linear- oder Angularbewegungen nach dem vorhergehenden Anspruch, dadurch gekennzeichnet, daß die Verarbeitungs- und Ausgabeeinrichtung (20) aus der ersten und/oder der zweiten Ausgangsgröße (UPOT, UPULS) und dem Zeitsignal unter Zugrundelegung vorherbestimmter Weg/Winkel-Zeit-Beziehungen abgeleitete Größen, nämlich Geschwindigkeit und/oder Beschleunigung der Eingangsgröße ermittelt.

15. Meßsystem für Linear- oder Angularbewegungen nach einem der vorhergehenden Ansprüche, dadurch gekennzeichnet, daß die Verarbeitungs- und Ausgabeeinrichtung (20) aus der ersten und/oder der zweiten Ausgangsgröße (UPOT, UPULS) unter Zugrundelegung von deren zeitlichem Verlauf abgeleitete Größen, nämlich Geschwindigkeit und/oder Beschleunigung der Eingangsgröße (s, alpha) ermittelt.

16. Meßsystem für Linear- oder Angularbewegungen nach einem der vorhergehenden Ansprüche, dadurch gekennzeichnet, daß die Verarbeitungs- und Ausgabeeinrichtung (20) aus dem zeitlichen Verlauf der ersten und/oder der zweiten Ausgangsgröße unter Zugrundelegung von deren zeitlichem Verlauf ermittelt, ob die jeweilige Ausgangsgröße einen möglichen korrekten Wert aufweist.

17. Verwendung eines Meßsensors für Linear- oder Angularbewegungen,-mit einem ersten Längen- oder Winkelaufnehmer (3), der nach einer ersten Meßmethode arbeitet und eine Eingangsgröße (s, alpha) in Form einer Linear- oder Angularbewegung in eine elektrisch verarbeitbare erste Ausgangsgröße (UPOT) umsetzt, und einem mit dem ersten Längen- oder Winkelaufnehmer (3) mechanisch gekoppelten zweiten Längen- oder Winkelaufnehmer (1), der nach einer von der ersten Meßmethode unterschiedlichen Meßmethode arbeitet und die Linear- oder Angularbewegung (s, alpha) in eine elektrisch verarbeitbare zweite Ausgangsgröße (UPULS) umsetzt, wobei die erste und die zweite Ausgangsgröße (UPOT, UPULS) für eine nachfolgende Verarbeitung und Auswertung bereitstehen, zum Aufbau eines Meßsystems für Linear- oder Angularbewegungen nach einem der vorhergehenden Ansprüche.

18. Verwendung eines Meßsystems nach einem der Ansprüche 1 bis 16 in einer elektronischen Bremsanlage mit einem elektronisch einstellbaren Bremskraftverstärker für Kraftfahrzeuge, wobei eine Betätigung eines mit dem Bremskraftverstärker gekoppelten Bremspedals eine Linear- oder Angularbewegung (s, alpha) hervorruft, die durch das Meßsystem erfaßt wird, wobei der Meßwert und ein Fehlersignal aus der Verarbeitungs- und Ausgabeeinrichtung (20) in der elektronischen Bremsanlage zur Erzeugung eines Ansteuersignals für den Bremskraftverstärker herangezogen wird.

## Claims

1. A measuring system for linear and angular movements, comprising
- a first length or angle sensor (3) which operates in accordance with a first measuring method and which converts an input value (s, alpha) in the form of a linear or angular movement into an electrically processible first output value (UPOT);
- a second length or angle sensor (1) which is mechanically coupled with the first length or angle sensor (3) and which operates in accordance with a measuring method that is different from the first measuring method and which converts the linear and angular movement (s, alpha) into an electrically processible second output value (UPULS), with
- the first and second output value (UPOT, UPULS) being available for subsequent processing and evaluation,
characterized in that
- the output value (UPOT) of the one length or angle sensor (3) also serves as an input value for the other length or angle sensor (1).

2. A measuring system for linear and angular movements according to Claim 1, characterized in that
- a processing and evaluation unit (20) is provided which is adapted for processing the two output values and for outputting a measuring value and an error signal, if applicable.

3. A measuring system for linear and angular movements according to one of the previous claims, characterized in that the first length or angle sensor (3) operates in accordance with an analog measuring method and the second length or angle sensor (1) operates in accordance with a digital measuring method.

4. A measuring system for linear and angular movements according to one of the previous claims, characterized in that first and second converters (10, 12; 11, 16) are provided for the conversion of the first and second output value (UPOT, UPULS) into first and second measuring values (ADPOT, NPULS) which are comparable to each other and which are processed in a processing and output means (20) and output.

5. A measuring system for linear and angular movements according to one of the previous claims, characterized in that
- the first length or angle sensor (3) is capable of sensing electrical resistance, capacitance, inductance, light transmission or field strength values which continuously vary as a function of a travel (s) or an angle (alpha), and
- the second length or angle sensor (1) is capable of sensing electrical resistance, capacitance, inductance, light transmission or field strength values, which vary in a pulse-type manner as a function of a travel (s) or an angle (alpha).

6. A measuring system for linear and angular movements according to one of the previous claims, characterized in that the first and/or the second length or angle sensor (3 and/or 1) is a coded sensor which outputs an absolute output value which is dependent on the travel or the angle (s, alpha).

7. A measuring system for linear and angular movements according to one of the previous claims, characterized in that the first and/or the second length or angle sensor (1) is an incremental sensor which outputs a relative output value which is dependent on a predetermined travel or angle section.

8. A measuring system for linear and angular movements according to one of the previous claims, characterized in that the first length or angle sensor (3) is designed as a potentiometer and the second length or angle sensor (1) is designed as a mechanically scannable grid (1b).

9. A measuring system for linear and angular movements according to the previous claim, characterized in that the grid (1b) is designed as an equidistant stripe pattern.

10. A measuring system for linear and angular movements according to the previous claim, characterized in that individual stripes of the grid (1b) are electrically connected with each other.

11. A measuring system for linear and angular movements according to one of the previous claims, characterized in that the first and the second length or angle sensor (3, 1) are arranged parallel or coaxially, respectively, to each other, adjacent to which at least one electrically conductive track (2, 4) is arranged for the supply of the operating voltage or the determination of the measuring values.

12. A measuring system for linear and angular movements according to one of the previous claims, characterized in that the processing and output means (20) is adapted for determining an expected value of the output value of the one length or angle sensor from the output value of the other length or angle sensor, for comparing the expected value with the actual output value and, in the case of a deviation by a certain value, for generating an error signal.

13. A measuring system for linear and angular movements according to one of the previous claims, characterized in that the processing and output means (20) comprises a timer (19) which provides a time signal which is utilized for checking one or both output values (UPOT, UPULS) on the basis of predetermined travel/angle time relationships.

14. A measuring system for linear and angular movements according to the previous claim, characterized in that the processing and output means (20) determines derived values, i.e. velocity and/or acceleration of the input value, from the first and/or the second output value (UPOT, UPULS) on the basis of predetermined travel/angle time relationships.

15. A measuring system for linear and angular movements according to one of the previous claims, characterized in that the processing and output means (20) determines derived values, i.e. velocity and/or acceleration of the input value (s, alpha), from the first and/or the second output value (UPOT, UPULS) on the basis of their variation as a function of time.

16. A measuring system for linear and angular movements according to one of the previous claims, characterized in that the processing and output means (20) determines from the variation of the first and/or the second output value as a function of time on the basis of its variation as a function of time whether the respective output value represents a possible correct value.

17. An application of a measuring sensor for linear or angular movements comprising a first length or angle sensor (3) which operates in accordance with a first measuring method and which converts an input value (s, alpha) in the form of a linear or angular movement into an electrically processible first output value (UPOT), and a second length or angle sensor (1) which is mechanically coupled with the first length or angle sensor (3) and which operates in accordance with a measuring method that is different from the first measuring method and converts the linear and angular movement (s, alpha) into an electrically processible second output value (UPULS), with the first and second output value (UPOT, UPULS) being available for a subsequent processing and evaluation, for the construction of a measuring system for linear or angluar movements according to one of the previous claims.

18. An application of a measuring system according to one of Claims 1 through 16 in an electronic braking system with an electronicallv adjustable brake booster for motor vehicles, wherein an actuation of a brake pedal which is coupled with the brake booster causes a linear or an angular movement (s, alpha) which is sensed by the measuring system, with the measuring value and an error signal from the processing and output means (20) in the electronic braking system being utilized for the generation of a control signal for the brake booster.

## Revendications

1. Système de mesure de mouvements linéaires ou angulaires, comprenant
- un premier capteur de distances ou d'angles (3) qui fonctionne selon une première méthode de mesure et convertit une grandeur d'entrée (s, alpha) sous forme de mouvement linéaire ou angulaire en une première grandeur de sortie (UPOT) pouvant être traitée électriquement,
- un deuxième capteur de distances ou d'angles (1) couplé mécaniquement au premier capteur de distances ou d'angles (3), qui fonctionne selon une méthode de mesure différente de la première méthode de mesure et convertit le mouvement linéaire ou angulaire (s, alpha) en une deuxième grandeur de sortie (UPULS) pouvant être traitée électriquement,
- les première et deuxième grandeurs de sortie (UPOT, UPULS) étant disponibles pour un traitement et une évaluation ultérieurs,
caractérisé en ce que
- la grandeur de sortie (UPOT) de l'un des capteurs de distances ou d'angles (3) sert aussi de grandeur d'entrée pour l'autre capteur de distances ou d'angles (1).

2. Système de mesure de mouvements linéaires ou angulaires selon la revendication 1, caractérisé en ce qu'il comprend
- un dispositif de traitement et de sortie (20) qui est conçu pour traiter les deux grandeurs de sortie et émettre une valeur de mesure ainsi que le cas échéant un signal d'erreur.

3. Système de mesure de mouvements linéaires ou angulaires selon l'une quelconque des revendications précédentes, caractérisé en ce que le premier capteur de distances ou d'angles (3) fonctionne selon une méthode de mesure analogique et le deuxième capteur de distances ou d'angles (1) fonctionne selon une méthode de mesure numérique.

4. Système de mesure de mouvements linéaires ou angulaires selon l'une quelconque des revendications précédentes, caractérisé en ce qu'il comprend un premier et un deuxième convertisseurs (10, 12; 11, 16) pour la conversion de la première et de la deuxième grandeurs de sortie (UPOT, UPULS) en des première et deuxième valeurs de mesure respectives (ADPOT, NPULS) qui sont traitées dans un dispositif de traitement et de sortie (20).

5. Système de mesure de mouvements linéaires ou angulaires selon l'une quelconque des revendications précédentes,
caractérisé en ce que
- le premier capteur de distances ou d'angles (3) peut effectuer une saisie de valeurs de résistance électrique, de capacité électrique, d'inductance, de transparence à la lumière ou d'intensité de champ variant en continu en fonction d'un trajet (s) ou d'un angle (alpha), et
- le deuxième capteur de distances ou d'angles (1) peut effectuer une saisie de valeurs de résistance électrique, de capacité électrique, d'inductance, de transparence à la lumière ou d'intensité de champ variant par incréments en fonction d'un trajet (s) ou d'un angle (alpha).

6. Système de mesure de mouvements linéaires ou angulaires selon l'une quelconque des revendications précédentes, caractérisé en ce que le premier et/ou le deuxième capteur de distances ou d'angles (1) est un capteur codé qui émet une valeur de sortie absolue dépendant du trajet ou de l'angle (s, alpha).

7. Système de mesure de mouvements linéaires ou angulaires selon l'une quelconque des revendications précédentes, caractérisé en ce que le premier et/ou le deuxième capteur de distances ou d'angles (1) est un capteur à incréments qui émet une valeur de sortie relative dépendant d'une portion de trajet ou d'une portion d'angle prédéterminée.

8. Système de mesure de mouvements linéaires ou angulaires selon l'une quelconque des revendications précédentes, caractérisé en ce que le premier capteur de distances ou d'angles (3) est un potentiomètre et le deuxième capteur de distances ou d'angles (1) est un réseau (1b) pouvant être palpé mécaniquement.

9. Système de mesure de mouvements linéaires ou angulaires selon la revendication précédente, caractérisé en ce que le réseau (1b) est un motif de bandes équidistantes.

10. Système de mesure de mouvements linéaires ou angulaires selon la revendication précédente, caractérisé en ce que les bandes individuelles du réseau (1b) sont reliées électriquement entre elles.

11. Système de mesure de mouvements linéaires ou angulaires selon l'une quelconque des revendications précédentes, caractérisé en ce que le premier et le deuxième capteur de distances ou d'angles (3, 1) sont disposés parallèles l'un à l'autre respectivement coaxiaux et en ce qu'à côté de ceux-ci est disposée une piste conductrice (2, 4) d'amenée de la tension d'alimentation ou de dérivation de grandeurs de mesure.

12. Système de mesure de mouvements linéaires ou angulaires selon l'une quelconque des revendications précédentes, caractérisé en ce que le dispositif de traitement et de sortie (20) est conçu pour déterminer une valeur escomptée de la grandeur de sortie de l'un des capteurs de distances ou d'angles à partir de la grandeur de sortie de l'autre capteur de distances ou d'angles, pour comparer la valeur escomptée à la valeur de sortie effective et, dans la cas d'une différence d'une valeur prédéterminée, pour générer un signal d'erreur.

13. Système de mesure de mouvements linéaires ou angulaires selon l'une quelconque des revendications précédentes, caractérisé en ce que le dispositif de traitement et de sortie (20) présente une horloge (19) qui délivre un signal d'horloge qui est utilisé pour une vérification d'une ou des deux grandeurs de sortie (UPOT, UPULS) à partir de relations trajet / angle - temps prédéterminées.

14. Système de mesure de mouvements linéaires ou angulaires selon la revendication précédente, caractérisé en ce que le dispositif de traitement et de sortie (20) détermine des grandeurs dérivées à partir de la première et/ou de la deuxième grandeur de sortie (UPOT, UPULS) et du signal d'horloge à partir de relations trajet / angle - temps prédéterminées, à savoir la vitesse et/ou l'accélération de la grandeur d'entrée.

15. Système de mesure de mouvements linéaires ou angulaires selon l'une quelconque des revendications précédentes, caractérisé en ce que le dispositif de traitement et de sortie (20) détermine à partir des grandeurs dérivées de la première et/ou de la deuxième grandeur de sortie (UPOT, UPULS) à partir de la variation dans le temps de celles-ci, à savoir la vitesse et/ou l'accélération de la valeur d'entrée (s, alpha).

16. Système de mesure de mouvements linéaires ou angulaires selon l'une quelconque des revendications précédentes, caractérisé en ce que le dispositif de traitement et de sortie (20) détermine à partir des variations dans le temps de la première et/ou de la deuxième grandeur de sortie à partir des variations dans le temps de celles-ci, si la valeur de sortie respective présente une valeur qui peut être correcte.

17. Utilisation d'un capteur de mesure de mouvements linéaires ou angulaires, comprenant un premier capteur de distances ou d'angles (3) qui fonctionne selon une première méthode de mesure et convertit une grandeur d'entrée (s, alpha) sous la forme d'un mouvement linéaire ou angulaire en une première grandeur de sortie (UPOT) pouvant être traitée électriquement, et un deuxième capteur de distances ou d'angles (1) couplé mécaniquement au premier capteur de distances ou d'angles (3), qui fonctionne selon une méthode de mesure différente de la première méthode de mesure et convertit le mouvement linéaire ou angulaire (s, alpha) en une deuxième grandeur de sortie (UPULS) pouvant être traitée électriquement, les première et deuxième grandeurs de sortie (UPOT, UPULS) étant disponibles pour un traitement et une évaluation ultérieurs, pour former un système de mesure de mouvements linéaires ou angulaires selon l'une quelconque des revendications précédentes.

18. Utilisation d'un système de mesure selon l'une quelconque des revendications 1 à 16 dans une installation de freinage électronique de véhicules comprenant un servofrein réglable électroniquement, dans laquelle un actionnement d'une pédale de freins couplée avec le servofrein engendre un mouvement linéaire ou angulaire (s, alpha) qui est mesuré par le système de mesure, la valeur mesurée et un signal d'erreur provenant du dispositif de traitement et de sortie (20) étant utilisés dans l'installation de freinage électronique pour engendrer un signal de commande pour le servofrein.
